# EUROPÄISCHE PATENTSCHRIFT

(11) **EP 0 782 484 B1**
(45) Veröffentlichungstag und Bekanntmachung des Hinweises auf die Patenterteilung: **15.03.2000**
(21) Anmeldenummer: 96915952.4
(22) Anmeldetag: 28.05.1996
(51) Int. Cl.: B21K 25/00, B23P 11/00, B21D 39/04

(54) **VERFAHREN ZUR HERSTELLUNG EINER VERBINDUNG EINES EINSATZTEILS MIT EINEM ROHRARTIGEN TEIL MITTELS BÖRDELUNG**
PROCESS FOR JOINING AN INSERT TO A TUBULAR PART BY FLANGING
PROCEDE POUR LIER UNE INSERTION A UNE PIECE TUBULAIRE PAR SERTISSAGE

(30) Priorität: 25.07.1995 DE 19527125
(43) Veröffentlichungstag der Anmeldung: 09.07.1997
(73) Patentinhaber: ROBERT BOSCH GMBH, 70442 Stuttgart (DE)
(72) Erfinder: ROSE, Jochen, D-71282 Hemmingen (DE)
(86) Internationale Anmeldenummer: DE9600923
(87) Internationale Veröffentlichungsnummer: WO9704898

(56) Entgegenhaltungen:
- EP-A- 0 350 927
- EP-A- 0 526 405
- DE-A- 2 706 396
- DE-A- 4 435 466
- FR-A- 2 335 777
- US-A- 2 852 843
- US-A- 3 372 452

## Beschreibung

### Stand der Technik

Die Erfindung geht aus von einem Verfahren zur Herstellung einer Verbindung eines Einsatzteiles mit einem rohrartigen Teil mittels Bördelung nach der Gattung des Anspruchs 1.

Ein solches Verfahren ist beispielsweise durch die DE 40 13 032 A1 bekannt. Bei diesem Verfahren ist das Einsatzteil als ein Deckel ausgebildet, der von einem Stirnende eines als Gehäuse ausgebildeten rohrartigen Teils eingeführt wird. Der Deckel kommt in Richtung der Längsachse des Gehäuses an einem Anschlag zur Anlage, um eine genaue Positionierung in Richtung der Längsachse sicherzustellen. Anschließend wird der über den Deckel in Richtung der Längsachse überstehende Rand des Gehäuses unter plastischer Verformung radial nach innen bezüglich der Längsachse des Gehäuses umgebördelt, so daß er über den Außenrand des Deckels greift und in Richtung der Längsachse am Deckel anliegt. Der Deckel ist dann zwischen dem Anschlag und dem umbördelten Rand des Gehäuses in Richtung der Längsachse festgelegt. Beim Umbördeln des Randes des Gehäuses wird das Gehäuse in Richtung von dessen Längsachse zusammengedrückt und federt nach der Bördelung wieder auf. Die Haltekraft der Bördelung wird verringert und kann unter ungünstigen Umständen sogar zu Null werden.

Es ist desweiteren ein Verfahren bekannt, bei dem die Aufrechterhaltung der Haltekraft der Bördelung sichergestellt ist. Das rohrartige Teil weist dazu an seinem einen Ende, in das das Einsatzteil eingeführt wird, zumindest über einen Teil seines Umfanges einen Bereich mit gegenüber seinem übrigen Bereich vergrößerten Außendurchmesser auf. Zur Herstellung der Umbördelung wird über das rohrartige Teil von dessen anderem Ende her ein ringartiges Werkzeugteil mit einer Öffnung aufgeschoben, deren Querschnitt kleiner ist als der Bereich des rohrartigen Teils mit vergrößertem Außenquerschnitt und mindestens so groß ist wie der Außenquerschnitt des übrigen rohrartigen Teils. Zwischen dem Werkzeugteil und dem rohrartigen Teil erfolgt eine Relativbewegung in Richtung der Längsachse, so daß das Werkzeugteil über den Bereich des rohrartigen Teils mit vergrößertem Außenquerschnitt bewegt wird und dieser Bereich unter plastischer Verformung radial nach innen bezüglich der Längsachse gedrückt wird. Während das ringartige Werkzeugteil über den Bereich des rohrartigen Teils mit vergrößertem Außenquerschnitt bewegt wird, wirkt gleichzeitig auf das rohrartige Teil eine Zugkraft, so daß durch die nach Herstellung der Bördelung auftretende Rückfederung des rohrartigen Teils die Haltekraft auf das Einsatzteil noch erhöht wird und somit eine sichere Befestigung des Einsatzteils im rohrartigen Teil erreicht wird.

Der an dem einen Ende, in das das Pumpenteil eingesetzt wird, ausgebildete Bereich, der gegenüber seinem übrigen Bereich einen vergrößerten Außenquerschnitt aufweist, erfordert mehrere Arbeitsschritte, beispielsweise durch Tiefziehen, zu dessen Herstellung.

### Vorteile der Erfindung

Das erfindungsgemäße Verfahren zur Herstellung einer Verbindung eines Einsatzteils mit einem rohrartigen Teil mittels Bördelung mit den Merkmalen des Anspruchs 1 hat demgegenüber den Vorteil, daß an dem rohrartigen Teil ein im Durchmesser vergrößerter Bereich vorgesehen ist, der während des Bördelvorganges durch ein das rohrartige Teil aufnehmendes Werkzeugteil elastisch verformt und das freie Ende des rohrartigen Teils dadurch gestreckt wird, wobei nach dem Bördelvorgang das Rückfedern der Bördelung durch eine Rückverformung des elastischen Bereichs des rohrartigen Teils kompensiert werden kann und das Einsatzteil zumindest unter teilweiser Spannung in dem rohrartigen Teil gehalten und eine sichere Befestigung erzielt werden kann.

In den abhängigen Ansprüchen sind vorteilhafte Ausgestaltungen und Weiterbildungen des Verfahrens angegeben.

### Zeichnung

Ein Ausführungsbeispiel der Erfindung ist in der Zeichnung dargestellt und in der nachfolgenden Beschreibung näher erläutert. Es zeigen:
- Fig. 1: ein Einsatzteil und ein rohrartiges Teil bei einer ersten Phase der Herstellung einer Bördelverbindung mittels eines Werkzeugteils,
- Fig. 2: ein in einem Werkzeugteil eingespanntes rohrartiges Teil nach Rückfederung der hergestellten Bördelung,
- Fig. 3: eine Bördelverbindung nach Beendigung des erfindungsgemäßen Verfahrens und
- Fig. 4: eine weitere Ausführung zur Herstellung der erfindungsgemäßen Bördelverbindung mit einem zweiteiligen rohrartigen Teil.

### Beschreibung des Ausführungsbeispiels

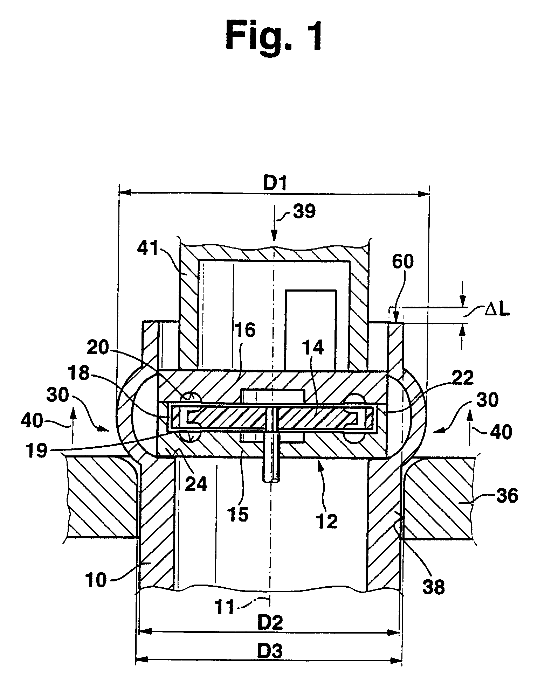

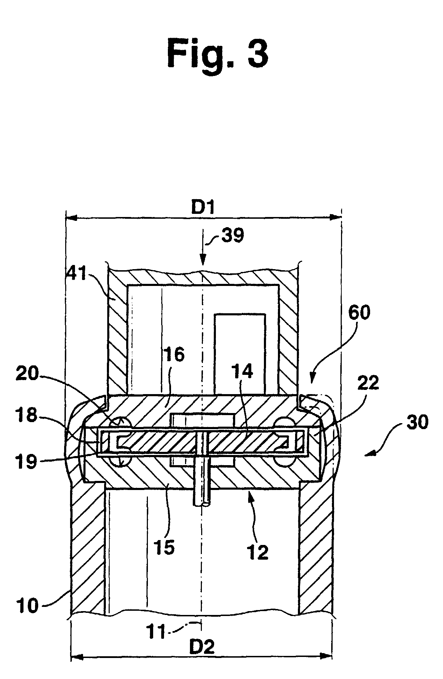

Ein in den Fig. 1 bis 4 dargestelltes Aggregat weist ein rohrartiges Teil 10 und ein in diesem angeordneten Einsatzteil 12 auf. Bei dem Aggregat handelt es sich um ein Kraftstofförderaggregat zur Versorgung einer Brennkraftmaschine eines Kraftfahrzeuges mit Kraftstoff. Das rohrartige Teil 10 ist dabei ein Gehäuse und das Einsatzteil 12 ist ein Pumpenteil, das von einer Stirnseite her in das Gehäuse 10 eingesetzt ist.

Im Gehäuse 10 ist außer dem Pumpenteil 12 ein elektrischer Antriebsmotor aufgenommen. Das Pumpenteil 12 ist als Strömungspumpenteil ausgeführt und weist ein Flügelrad 14 auf, das in einer in Richtung der Längsachse 11 des Gehäuses 10 durch zwei Wandungsteile 15 und 16 begrenzten Pumpenkammer 18 angeordnet ist. Die Wandungsteile 15 und 16 weisen in ihren dem Flügelrad 14 zugewandten Stirnseiten jeweils einen ringförmigen Förderkanal 19 und 20 auf, der auf dem gleichen Durchmesser angeordnet ist wie die Flügel des Flügelrades 14. Zwischen den beiden Wandungsteilen 15 und 16 ist in Richtung der Längsachse 11 des Gehäuses 10 ein Abstand vorhanden, um das Flügelrad 14 mit einem bestimmten Axialspiel in der Pumpenkammer 18 aufzunehmen. Das innere Wandungsteil 15 weist ein die Pumpenkammer 18 in radialer Richtung bezüglich der Längsachse 11 begrenzenden zylindrischen Ansatz 22 auf, an dessen Stirnseite das äußere Wandungsteil 16 anliegt.

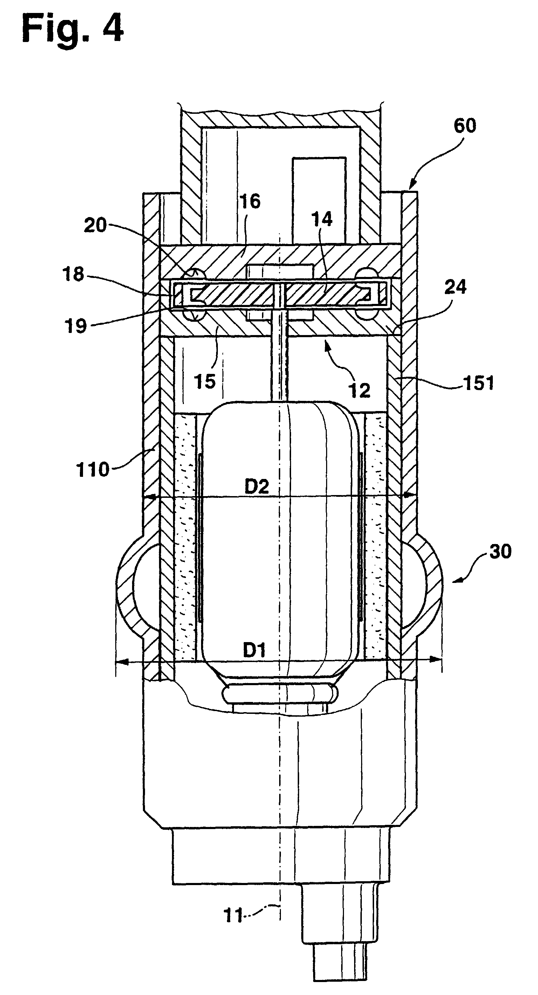

Das Gehäuse 10 weist in seinem Endbereich, in dem das Pumpenteil 12 angeordnet ist, einen größeren Durchmesser auf als in seinem übrigen Bereich, so daß am Übergang des größeren Durchmessers zum kleineren Durchmesser eine radiale zur Längsachse des Gehäuses 10 angeordnete, zum Stirnende des Gehäuses 10 weisende Stufe 24 gebildet ist. Die Stufe 24 bildet einen Anschlag, an dem das Pumpenteil 12 über das innere Wandungsteil 15 in Richtung der Längsachse zur Anlage kommt. Ein axialer Anschlag 24 für das Pumpenteil 12 kann auch durch ein weiteres im Gehäuse 10 angeordnetes Bauteil gebildet sein. (Fig. 4).

Das Gehäuse 10 ist im Querschnitt kreisförmig ausgebildet und weist im Bereich seines einen Endes, in das das Pumpenteil 12 eingesetzt wird, einen Bereich 30 mit gegenüber seinem übrigen Bereich vergrößerten Durchmesser, insbesondere vergrößertem Außendurchmesser, auf. Der Außendurchmesser des Gehäuses 10 ist im Bereich 30 mit D1 bezeichnet und der Außendurchmesser des Gehäuses 10 im an dem Bereich 30 anschließenden übrigen Bereich ist mit D2 bezeichnet. Der Bereich 30 erstreckt sich über den gesamten Umfang des Gehäuses 10 und bildet eine umlaufende Sicke, die über ihren Bereich 30 eine gleichförmige Krümmung aufweist und sichel- oder halbkreisförmig ausgebildet ist. Die Ausbildung der umlaufenden Sicke kann durch bekannte fertigungstechnische Verfahren hergestellt werden. Das Gehäuse 10 besteht aus einem zumindest elastisch verformbaren Werkstoff, insbesondere Metall, und kann beispielsweise durch Tiefziehen hergestellt sein.

Durch die Ausbildung des im Durchmesser vergrößerten Bereich 30 ist die Gesamtlänge des Gehäuses um den Betrag Δl verkürzt. Der Betrag, um den der Außendurchmesser D1 des vergrößerten Bereichs 30 gegenüber dem Außendurchmesser D2 vergrößert ist, bestimmt den Betrag Δl, um den die Gesamtlänge des Gehäuses 10 verkürzt ist. Dieser Betrag Δl der Verkürzung bestimmt, wie nachfolgend noch weiter ausgeführt wird, die Halte- bzw. Spannkraft, mit der das Einsatzteil 12 zu dem Anschlag 24 in dem Gehäuse 10 gehalten ist.

In Fig. 1 ist das Gehäuse 10 mit dem in diesem eingesetzten Pumpenteil 12 dargestellt, bevor das Pumpenteil 12 befestigt ist. Über das Gehäuse 10 wird von dessen dem im Durchmesser vergrößerten Bereich 30 gegenüberliegendem Ende her ein ringartiges Werkzeugteil 36 geschoben, das eine Öffnung 38 aufweist, deren Durchmesser D3 nur weniger größer als der Durchmesser D2 des Gehäuses 10 außerhalb dem im Durchmesser vergrößerten Bereich 30 ist, so daß das Werkzeugteil 36 ohne Klemmen auf dem Gehäuse 10 bis zu dem Bereich 30 verschiebbar ist.

Das Werkzeugteil 36 kann feststehend als Teil einer Vorrichtung angeordnet sein, wobei dann das Gehäuse 10 in dessen Öffnung 38 in Richtung des Pfeils 39 in Fig. 1 eingeschoben wird oder das Gehäuse 10 kann in einer Vorrichtung eingespannt werden und das Werkzeugteil 36 wird dann auf das Gehäuse 10 in Richtung der Pfeile 40 in Fig. 1 aufgeschoben.

Alternativ kann das Werkzeugteil 36 als segmentartiger Ring ausgebildet sein, der in einem Ruhezustand, in dem dieser gespreizt ist, zu dem vergrößerten Bereich 30 positioniert wird. Dieser segmentartige Ring ist in einen Spann- oder Arbeitszustand überführbar, wobei der segmentartige Ring den vergrößerten Bereich zusammendrückt. Somit kann der vergrößerte Bereich 30 frei in die Beabeitungsposition zu dem Wekzeugteil 36 eingesetzt werden.

Die Öffnung 38 des Werkzeugteils 36 ist an ihrem zum im Durchmesser vergrößerten Bereich 30 weisenden Rand sich vom Durchmesser D3 aus erweitert gerundet, kann jedoch beispielsweise auch konisch vom Durchmesser D3 aus erweiternd ausgebildet sein.

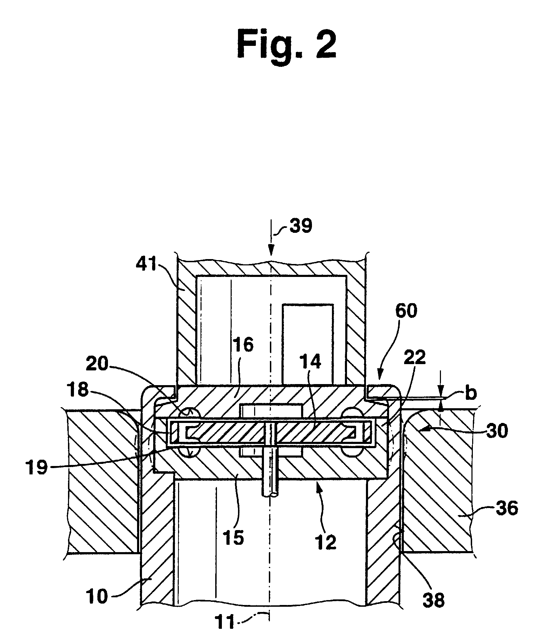

Das Pumpenteil 12 wird mittels eines an dessen äußerem Wandungsteil 16 angreifenden Niederhalter 41 mit seinem inneren Wandungsteil 15 in der Anlage an der Stufe 24 gehalten. Zwischen dem Gehäuse 10 und dem Werkzeugteil 36 wird anschließend eine Relativbewegung in Richtung der Längsachse 11 bewirkt, indem entweder das Gehäuse 10 in relativ zum feststehenden Werkzeugteil 36 bewegt wird oder das Werkzeugteil 36 relativ zum feststehenden Gehäuse 10 bewegt wird. Dabei gleitet das Werkzeugteil 36 auf den im Durchmesser vergrößerten Bereich 30 auf, was durch den gerundeten oder angeschrägten Rand der Öffnung 38 des Werkzeugteils 36 und den angeschrägten oder gerundeten Anstieg oder Einführschräge des im Durchmesser vergrößerten Bereichs 30 erleichtert ist. Der Bereich 30 wird dabei durch das Werkzeugteil 36, wie in Fig. 2 dargestellt ist, unter elastischer Verformung radial nach innen bezüglich der Längsachse 11 gedrückt und liegt mit seiner inneren Mantelfläche an der äußeren Mantelfläche des Pumpenteils 12 an.

Durch die elastische Verformung des im Durchmesser vergrößerten Bereichs 30 wird das Gehäuse 10 auf seine ursprüngliche Länge in Richtung der Längsachse 11 gestreckt und in dieser Position gehalten. Die um den Betrag Δl bewirkte Verkürzung der gesamten Länge des Gehäuses 10 wird somit zumindest teilweise aufgehoben, wobei die ursprüngliche Länge des Gehäuses 10 dann erreicht werden kann, wenn der Durchmesser D3 der Öffnung 38 des Werkzeugteils 36 im wesentlichen dem Außendurchmesser D2 des Gehäuses 10 entspricht.

In der in Fig. 2 dargestellten Anordnung des Werkzeugteils 36 zu dem Gehäuse 10 erfolgt die Bördelung des einen Endes 60, in das das Pumpenteil 12 eingesetzt wird, mit dem üblichen Bördelwerkzeug. Dabei wird das Pumpenteil 12 mittels eines an dessen äußeren Wandungsteil 16 angreifenden Niederhalter 41 mit seinem inneren Wandungsteil 15 in der Anlage an der Stufe 24 gehalten. Nach Beendigung des Bördelvorganges und Reduzierung des Bördeldruckes federt das Gehäuse 10 teilweise wieder zurück, d.h., daß das umgebördelte freie Ende 60 des Gehäuses 10 federt nach der Bördelung um den Betrag b wieder etwas auf, wodurch normalerweise die Haltekraft der Bördelung verringert wird.

Nachdem die Bördelung hergestellt ist, wird das Gehäuse 10 bei dessen Anordnung in einem feststehenden Werkzeugteil 36 entgegen der Richtung des Pfeiles 39 aus dem Werkzeugteil 36 herausgeführt. Alternativ wird das Gehäuse 10, das in der Vorrichtung eingespannt ist, und das Werkzeugteil 36 zuvor auf den Gegenstand 10 in Richtung der Pfeile 40 aufgeschoben worden ist, entgegen der Richtung der Pfeile 40 abgenommen. Aufgrund der elastischen Verformung des im Durchmesser vergrößerten Bereichs 30 durch das diesen während des Bördelvorganges umspannenden Werkzeugteils 36 erfolgt eine Rückverformung des im Durchmesser vergrößerten Bereich 30 auf seine ursprüngliche Ausgestaltung. Dadurch tritt eine Verkürzung des Gehäuses 10 um den Betrag Δl, der die Rückfederung der Bördelung um den Betrag b ausgleicht und zumindest unter geringer Spannung das Pumpenteil 12 zu dem Anschlag 24 festlegt. Dadurch kann zumindest die Haltekraft der Bördelung aufrechterhalten bleiben und eine sichere Befestigung des Pumpenteils 12 in dem Gehäuse 10 erreicht werden.

Der im Durchmesser vergrößerte Bereich 30 weist bevorzugt einen Durchmesser D1 auf, der eine Verkürzung der Gesamtlänge des Gehäuses 10 um den Betrag Δl aufweist, das nach der Rückverformung des Bereiches 30 in seine ursprüngliche Form das Pumpenteil 12 zu dem Gehäuse unter Spannung festlegt, so daß die Haltekraft auf das Einsatzteil noch erhöht wird.

In Fig. 4 ist eine Variante des Gehäuses 110 dargestellt. Das Gehäuse 10 weist über die gesamte Länge eine konstante Wandstärke auf. In seinem Endbereich, in das das Pumpenteil 12 eingeführt und angeordnet ist, wird durch ein in dem Gehäuse 10 angeordneten Rohr 151 ein Übergang von dem größeren Durchmesser des Gehäuses 10 zu dem kleineren Durchmesser des Rohres 151 eine radial zur Längsachse 11 des Gehäuses 10 angeordnete, zum Stirnende des Gehäuses 10 weisende Stufe 24 gebildet. An dieser Stufe 24, die einen Anschlag bildet und durch das Gehäuse 110 und das Rohr 151 gebildet ist, kommt das Pumpenteil 12 über das innere Wandungsteil 15 in Richtung der Längsachse 11 zur Anlage.

Diese alternative Ausgestaltung weist den Vorteil auf, daß der im Durchmesser vergrößerte Bereich 30 über die gesamte Länge des Gehäuses 10 wahlweise anordenbar ist.

Das in dem Gehäuse 110 angeordnete Rohr 151 ist in den in Fig. 1 und Fig. 2 beschriebenen Verfahrensschritten lose in dem Gehäuse 110 angeordnet. Dadurch kann ebenso durch die elastische Verformung des im Durchmesser vergrößerten Bereichs 30 von seinem Durchmesser D1 auf den Durchmesser D3 eine Streckung des Gehäuses 10 erfolgen, da das Gehäuse 10 nicht an den Anschlag 24 unmittelbar angebunden ist und in dieser Position relativ zum freien Ende 60 nicht ortsfest ist. Nachdem der Bördelprozeß beendet ist und das Gehäuse 110 aus dem Werkzeugteil 36 herausgeführt ist, federt der unter Spannung gehaltene vergrößerte Bereich 30 auf seinen ursprünglichen Durchmesser D1 zurück, wodurch die Gesamtlänge des Gehäuses 110 um den Betrag Δl wiederum verkürzt wird. Zu diesem Zeitpunkt ist das Rohr 151 unverschiebbar in dem Gehäuse 110 angeordnet, wobei das Pumpenteil 12 unter Spannung durch die von der Umbördelung aufgebrachte Spannkraft an dem durch das Rohr 151 gebildeten Anschlag anliegt.

Alternativ kann vorgesehen sein, daß das Gehäuse 10, 110 zwei oder mehrere im Durchmesser vergrößerte Bereiche 30 aufweist. Ferner kann der vergrößerte Bereich 30 zumindest in Richtung des Pfeiles 39 eine Einführschräge oder zumindest eine flach ansteigende Randzone aufweisen, damit das Einführen des Gehäuses 10, 110 in die Öffnung 38 des Werkzeugteils 36 erleichtert ist. Der dieser Einführschräge gegenüberliegende Abschnitt des im Durchmesser vergrößerten Bereichs 30 kann steiler ausgebildet sein, so daß es nicht erforderlich ist, daß die umlaufende Sicke einen konstanten Verlauf aufweist.

## Patentansprüche

1. Verfahren zur Herstellung einer Verbindung eines Einsatzteils (12) in einem rohrartigen Teil (10, 110) mittels Bördelung, bei dem das Einsatzteil (12) von einem Stirnende her in das rohrartige Teil (10) eingeführt und in Richtung der Längsachse (11) des rohrartigen Teils (10, 110) an einem Anschlag (24) zur Anlage kommt und durch Umbördelung des überstehenden Randes (60) des rohrartigen Teils (10, 110) radial nach innen bezüglich der Längsachse (11) über das Einsatzteil (12) dieses in Richtung der Längsachse (11) zwischen dem Anschlag (24) und dem umbördelten Rand (60) festgelegt wird, dadurch gekennzeichnet, daß das rohrartige Teil (10, 110) zumindest über einen Teil seines Umfanges zumindest einen Bereich (30) mit vergrößertem Durchmesser aufweist, daß dieser Bereich (30) mittels eines Werkzeugteils(36) unter elastischer Verformung radial nach innen bezüglich der Längsachse (11) gedrückt wird, so daß das rohrartige Teil (10) um den Betrag Δl gestreckt wird, um den das rohrartige Teil (10, 110) durch die Ausbildung des im Durchmesser vergrößerten Bereichs (30) verkürzt ist und daß bei gestrecktem rohrartigen Teil (10, 110) der Rand (60) des rohrartigen Teils (10, 110) umgebördelt wird.

2. Verfahren nach Anspruch 1, dadurch gekennzeichnet, daß während das Werkzeugteil (36) den vergrößerten Bereich (30) unter elastischer Verformung im wesentlichen auf seine ursprüngliche Länge gestreckt wird, das freie Ende (60) des rohrartigen Teils (10, 110) umgebördelt wird.

3. Verfahren nach Anspruch 2, dadurch gekennzeichnet, daß nach dem Bördelvorgang das rohrartige Teil (10, 110) aus dem Werkzeugteil (36) ausgespannt wird und der elastisch verformte Bereich (30) in seinen Ausgangszustand zurückfedert und die Rückfederung der Bördelung kompensiert wird.

4. Verfahren nach einem der Ansprüche 1 bis 3, dadurch gekennzeichnet, daß der im Durchmesser vergrößerte Bereich (30) eine in Aufschieberichtung des Werkzeugteils (36) ausgebildete Einführschräge aufweist.

5. Verfahren nach einem der Ansprüche 1 bis 4, dadurch gekennzeichnet, daß das rohrartige Teil (10, 110) zumindest um den Betrag in seinem Durchmesser vergrößert wird, daß nach der Bördelung und dem Ausspannen des Werkzeugteils (36) von dem rohrartigen Teil (10, 110) das Einsatzteil (12) zumindest unter leichter Spannung zu dem Anschlag (24) festgelegt wird.

6. Verfahren nach einem der Ansprüche 1 bis 5, dadurch gekennzeichnet, daß bei einem einteiligen rohrartigen Teil (10) der zumindest eine im Durchmesser vergrößerter Bereich (30) zwischen einem Ende (60) des rohrartigen Teils (10), in das das Einsatzteil (12) eingeführt wird und einen in dem rohrartigen Teil (10) angeformten Anschlag (24) ausgebildet ist.

7. Verfahren nach einem der Ansprüche 1 bis 5, dadurch gekennzeichnet, daß bei einem zwei- oder mehrteiligen rohrartigen Teil (110) zumindest ein im Durchmesser vergrößerter Bereich (30) über die gesamte Länge des rohrartigen Teils (110) frei wählbar angeordnet ist.

8. Verfahren nach einem der Ansprüche 1 bis 7, dadurch gekennzeichnet, daß zwei oder mehrere im Durchmesser vergrößerte Bereiche (30) in dem Umfangsbereich des rohrartigen Teils (10, 110) ausgeformt sind.

9. Verfahren nach einem der Ansprüche 1 bis 8, dadurch gekennzeichnet, daß der im Durchmesser vergrößerte Bereich (30) als eine umlaufende Sicke ausgebildet ist.

10. Verfahren nach einem der Ansprüche 1 bis 9, dadurch gekennzeichnet, daß die elastische Verformung des vergrößerten Bereichs (30) durch Überziehen eines ringartigen Werkzeugteils (36) erfolgt.

11. Verfahren nach einem der Ansprüche 1 bis 9, dadurch gekennzeichnet, daß die elastische Verformung des vergrößerten Bereichs (30) durch ein Werkzeugteils (36) erfolgt, das als ein segmentartiger Ring ausgebildet ist, der in radialer Richtung spreizbar und zusammendrückbar ist.

## Claims

1. Method of producing a connection for an insert part (12) in a tubular part (10, 110) by means of flanging, in the case of which the insert part (12) is introduced into the tubular part (10) from one end, and comes into abutment, in the direction of the longitudinal axis (11) of the tubular part (10, 110), against a stop (24) and, by virtue of the projecting border (60) of the tubular part (10, 110) being flanged radially inwards, in relation to the longitudinal axis (11), over the insert part (12), the latter is secured, in the direction of the longitudinal axis (11), between the stop (24) and the flanged border (60), characterized in that the tubular part (10, 110) has at least one region (30) of enlarged diameter at least over part of its circumference, in that said region (30) is forced radially inwards, in relation to the longitudinal axis (11), by means of a tool part (36), elastic deformation being brought about in the process, with the result that the tubular part (10) is extended by the amount Δl, by which the tubular part (10, 110) is shortened by the formation of the enlarged-diameter region (30), and in that the border (60) of the tubular part (10, 110) is flanged with the tubular part (10, 110) extended.

2. Method according to Claim 1, characterized in that the free end (60) of the tubular part (10, 110) is flanged while the tool part (36) extends the enlarged region (30) essentially to its original length, elastic deformation being brought about in the process.

3. Method according to Claim 2, characterized in that, following the flanging operation, the tubular part (10, 110) is released from the tool part (36) and the elastically deformed region (30) springs back into its original state and there is compensation for the spring-back action of the flanging.

4. Method according to one of Claims 1 to 3, characterized in that the enlarged-diameter region (30) has an introduction slope formed in the push-on direction of the tool part (36).

5. Method according to one of Claims 1 to 4, characterized in that the tubular part (10, 110) has its diameter enlarged at least by such an amount that, following the flanging operation and the release of the tool part (36) from the tubular part (10, 110), the insert part (12) is secured at least with slight stressing in relation to the stop (24).

6. Method according to one of Claims 1 to 5, characterized in that, in the case of a single-part tubular part (10), the at least one enlarged-diameter region (30) is formed between one end (60) of the tubular part (10), the insert part (12) being introduced into said end, and a stop (24), which is integrally formed in the tubular part (10).

7. Method according to one of Claims 1 to 5, characterized in that, in the case of a tubular part (110) comprising two or more parts, at least one enlarged-diameter region (30) is arranged in a freely selectable manner over the entire length of the tubular part (110).

8. Method according to one of Claims 1 to 7, characterized in that two or more enlarged-diameter regions (30) are formed in the circumferential region of the tubular part (10, 110).

9. Method according to one of Claims 1 to 8, characterized in that the enlarged-diameter region (30) is designed as a peripheral bead.

10. Method according to one of Claims 1 to 9, characterized in that the enlarged region (30) is elastically deformed by virtue of a ring-like tool part (36) being drawn over it.

11. Method according to one of Claims 1 to 9, characterized in that the enlarged region (30) is elastically deformed by a tool part (36) which is designed as a segment-like ring which can be radially expanded and compressed.

## Revendications

1. Procédé pour relier une pièce de garniture (12) à une pièce tubulaire (10, 110) par sertissage,
selon lequel
on introduit la pièce de garniture (12) par une extrémité frontale dans la pièce tubulaire (10) et on la met en butée contre un appui (24) dans la direction de l'axe longitudinal (11) de la pièce tubulaire (10, 110) et par sertissage du bord (60) qui dépasse de la pièce tubulaire (10, 110), on la bloque radialement vers l'intérieur par rapport à l'axe longitudinal (11), par dessus la pièce de garniture (12) dans la direction de l'axe longitudinal (11) entre la butée (24) et le bord serti (60),
caractérisé en ce que
- la pièce tubulaire (10, 110) présente au moins sur une partie de sa périphérie au moins une zone (30) de diamètre agrandi ;
- cette zone (30) est comprimée par un outil (36) sous déformation élastique, radialement vers l'intérieur par rapport à l'axe longitudinal (11) pour que la pièce tubulaire (10) s'allonge de la longueur Δl selon laquelle la pièce tubulaire (10, 110) a été raccourcie pour former la zone (30) de diamètre agrandi et
- on sertit le bord (60) de la pièce tubulaire allongée (10, 110).

2. Procédé selon la revendication 1,
caractérisé en ce que
pendant que l'outil (36) tient la zone agrandie (30) sous déformation élastique, essentiellement à sa longueur initiale, on sertit l'extrémité libre (60) de la pièce tubulaire (10, 110).

3. Procédé selon la revendication 2,
caractérisé en ce qu'
après l'opération de sertissage, on desserre la pièce tubulaire (10, 110) de l'outil (36) et la zone (30) à déformation élastique revient élastiquement à son état initial et on compense le rappel élastique engendré par le sertissage.

4. Procédé selon l'une des revendications 1 à 3,
caractérisé en ce que
la zone (30) de diamètre agrandi comporte une rampe d'introduction réalisée dans la direction d'engagement de l'outil (36).

5. Procédé selon l'une des revendications 1 à 4,
caractérisé en ce qu'
on augmente la pièce tubulaire (10, 110) au moins au niveau de son diamètre pour qu'après le sertissage et la détente de l'outil (36) par rapport à la pièce tubulaire (10, 110), la pièce de garniture (12) soit fixée au moins avec une légère tension par rapport à la butée (24).

6. Procédé selon l'une des revendications 1 à 5,
caractérisé en ce que
pour une pièce tubulaire (10) en une seule pièce, la zone (30) de diamètre agrandi est réalisée entre une extrémité (60) de la pièce tubulaire (10) recevant la pièce de garniture (12) et une butée (24) formée dans la pièce tubulaire (10) .

7. Procédé selon l'une des revendications 1 à 5,
caractérisé en ce que
pour une pièce tubulaire (110) en deux ou plusieurs parties, la zone (30) de diamètre agrandi est prévue librement sur toute la longueur de la pièce tubulaire (110).

8. Procédé selon l'une des revendications 1 à 7,
caractérisé en ce que
deux ou plusieurs zones de diamètre agrandi (30) sont réalisées dans la zone périphérique de la pièce tubulaire (10, 110).

9. Procédé selon l'une des revendications 1 à 8,
caractérisé en ce que
la zone (30) de diamètre agrandi est réalisée en forme de nervure périphérique.

10. Procédé selon l'une des revendications 1 à 9,
caractérisé en ce que
la déformation élastique de la zone agrandie (30) est obtenue en emmanchant un outil annulaire (36).

11. Procédé selon l'une des revendications 1 à 9,
caractérisé en ce que
la déformation élastique de la zone agrandie (30) est obtenue par un outil (36) en forme d'anneau segmenté qui peut s'étendre et se rétracter dans la direction radiale.
